Europäisches Patentamt

European Patent Office

Office européen des brevets

(19)

(11) Publication number:

**0 319 174**

**A2**

(12) **EUROPEAN PATENT APPLICATION**

(21) Application number: **88310886.2**

(22) Date of filing: **18.11.88**

(51) Int. Cl.⁴: **H04B 9/00**

(30) Priority: **30.11.87 GB 8727955**

(43) Date of publication of application:
**07.06.89 Bulletin 89/23**

(84) Designated Contracting States:
**DE FR IT**

(71) Applicant: **GEC PLESSEY**
**TELECOMMUNICATIONS LIMITED**
**P.O. Box 53 Telephone Road**
**Coventry, CV3 1HJ(GB)**

(72) Inventor: **Blackmore, Ronald William**
**9 Fairlea**
**Maidenhead Berkshire SL6 3AS(GB)**

(74) Representative: **Allen, Derek**
**The Plessey Company plc Intellectual**
**Property Department Vicarage Lane**
**Ilford Essex, IG1 4AQ(GB)**

(54) **Control circuit for the local oscillator of an optical homodyne or heterodyne receiver of a phase shift keying system.**

(57) The control arrangement is for a local oscillator of an optical homodyne or heterodyne receiver of a phase-shift keying system. The arrangement comprises a controller arranged to control means for maintaining the oscillator's frequency and phase at an optimum value. Means is provided to maintain the local oscillator's plane of polarisation co-planar with that of a signal received by the control arrangement. The means for maintaining the oscillator's frequency at an optimum value comprises a sweep oscillator and phase detector forming a phase lock loop for controlling the local oscillator.

EP 0 319 174 A2

## CONTROL CIRCUIT FOR THE LOCAL OSCILLATOR OF AN OPTICAL HOMODYNE OR HETERODYNE RECEIVER OF A PHASE SHIFT KEYING SYSTEM

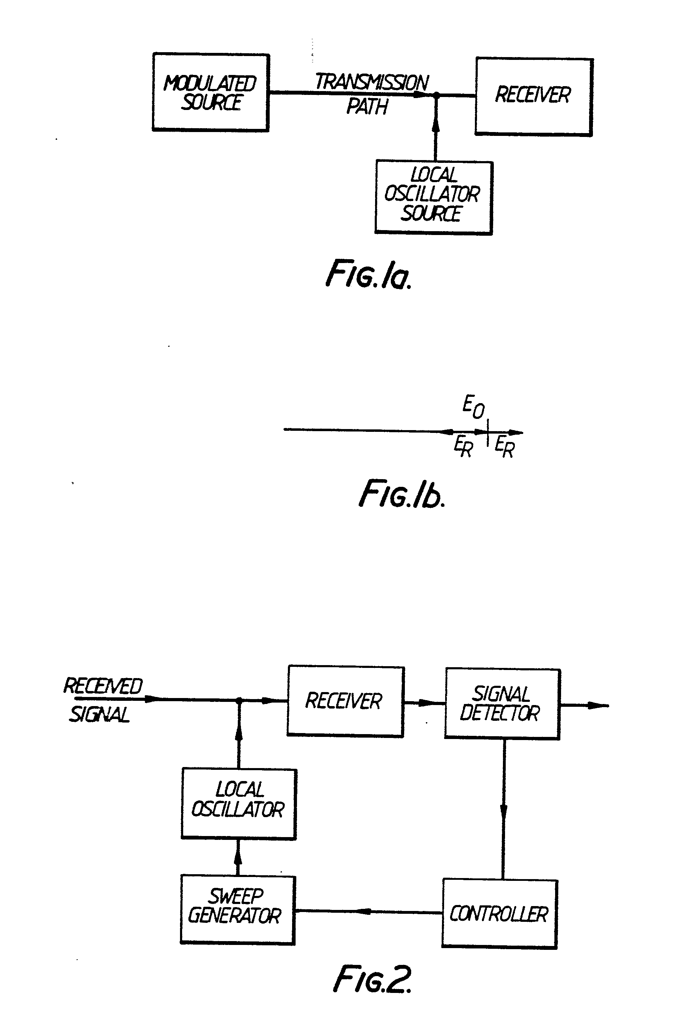

The present invention relates to a control circuit for the local oscillator of an optical homodyne or heterodyne receiver of a Phase Shift Keying (PSK) System. By using coherent sources and heterodyne techniques the receiver sensitivity of an optical system can be considerably enhanced. The receiver sensitivity can be improved still further by making the difference frequency zero so that the demodulated signal is at baseband, and produce the so called homodyne system. The basic configuration of a homodyne receiver is given in Figure 1a. At the receiver the transmitted signal and the light from the local oscillator are arranged to be in the same plane of polarisation. The combination of the two signals' fields can be seen readily from the vector diagram of Figure 1b. In the higher state the vectors add and the resultant intensity is a function of the square of the field and is proportional to $(E_O + E_R)^2$ or $E_O^2 + E_R^2 + 2E_OE_R$. Correspondingly when the transmitted signal's phase is inverted to the lower state, the intensity is $(E_O + E_R)^2$ or $E_O^2 + E_R^2 + 2E_OE_R$. As the signal current produced in the detector is proportional to the intensity it is evident that the current variation is proportional to $= 2E_OE_R$. The obvious improvement in signal level produces the better performance of such a receiver over a direct modulation type. Subsequently the signal current is amplified and regenerated in the conventional manner. To obtain the desired result it is necessary to shape the transitions from '1' to '0' and vice versa.

An aim of the present invention is to extract data from a received signal for use to control a local oscillator so that it is on the correct frequency, and subsequently provide control data to maintain the correct phase relationship.

A further aim of the present invention is to provide an alternative control arrangement.

According to the present invention there is provided a control arrangement for a local oscillator of an optical homodyne or heterodyne receiver of a phase shift keying system, wherein the arrangement comprises a controller arranged to control means for maintaining the osillator's frequency and phase at an optimum value.

Embodiments of the present invention will now be described with reference to the accompanying drawings wherein:

Figure 1a shows a block diagram of a homodyne receiver,

Figure 1b shows a vector diagram,

Figure 2 shows an initial frequency control circuit,

Figure 3 shows a phase offset vector diagram,

Figure 4 shows sinusoidal transitions,

Figure 5 shows spectral lines introduced by frequency misalignment,

Figure 6 shows a fine frequency control circuit of a local oscillator,

Figure 7 shows a phase control circuit of a local oscillator,

Figure 8 shows an overall block diagram of an optical homodyne frequency and phase control network,

Figure 9a shows an alternative block diagram of a homodyne receiver,

Figure 9b shows a vector diagram,

Figure 10 shows a course frequency control circuit,

Figure 11 shows combined signal and sampling points,

Figure 12 shows a vector sum of out of phase components,

Figure 13 shows a fine frequency control circuit,

Figure 14 shows a block diagram of an alternative optical homodyne frequency and phase control network,

Figure 15 shows a vectorial relationship in respect of a hetrodyne receiver,

Figure 16 shows signal regions,

Figure 17 shows a course frequency control circuit,

Figure 18 shows a fine frequency control circuit,

Figure 19 shows a final frequency control circuit, and,

Figure 20 shows a block diagram of an optical heterodyne frequency control network.

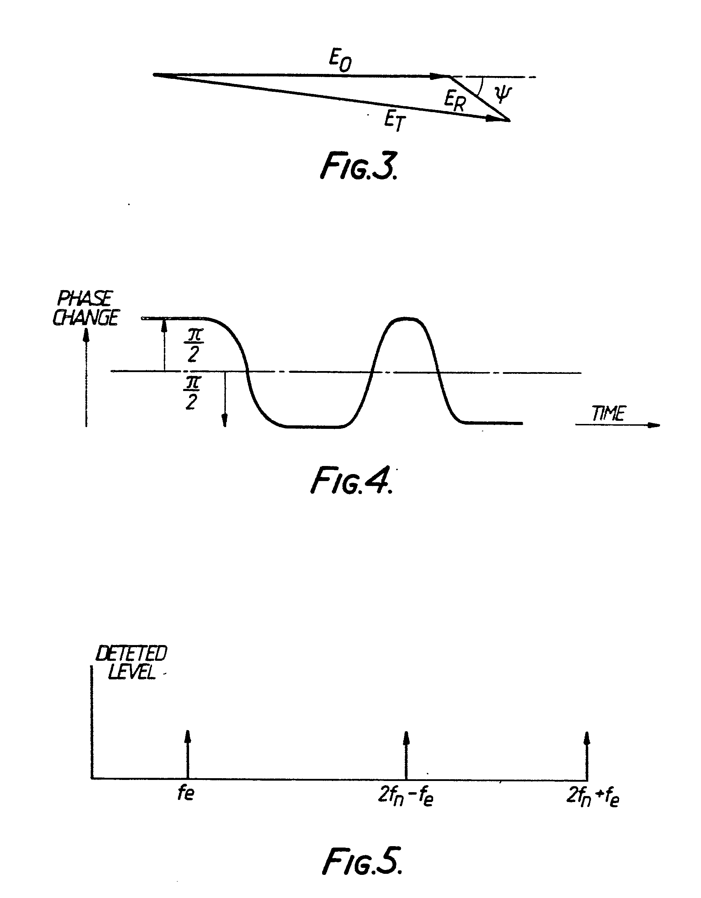

It must be assumed that with optical sources operating at wavelengths in the region of 1300 - 1600nm or frequencies around $2 \times 10^{19}$, that it will not be possible for the transmit and received frequencies to be close enough to be within the working range of the receiver's electrical control circuit which for an encoded 565MBits system operating at 687MBit/s would be about $4 \times 10^8$, or .0002% of the source frequencies. For this purpose it is assumed that the local oscillator would be slowly driven across a wavelength range in steps, until the presence of a signal in the receiver is indicated by a suitable detector which could be part of the AGC circuit as shown in Figure 2. The control mechanism for a semiconductor laser could be a variation of its standing current or temperature, and for a gas laser an external resonator or acoustoptic modulator. When the signal is within the receiver control range the initial swept control signal is locked at the control current level, and this would form the mean level for the fine frequency control system that is now to be described.

For a resonable understanding of the way that the control data is derived, it is necessary to provide a more detailed analysis than that derived earlier from Figure 1b. Consider the condition given by Figure 3 with the signals not phase related. By the well know trigonometrical relationship it can be shown that

$$E_T^2 = E_0^2 + E_R^2 + 2E_0E_R \cos \phi$$

Where $E_T$ is the total field
and $\phi$ the angle of misalignment.

Thus the signal level is proportional to
$2E_0E_R \cos \phi$

For convenience of explanation the shape is sinuousoidal as shown in Figure 4. The phase variation in the transition from the higher state conveniently referred to here as the 'one' state to the lower or 'zero' state is $\pi/2 \ (1-\cos \pi t/T)$.

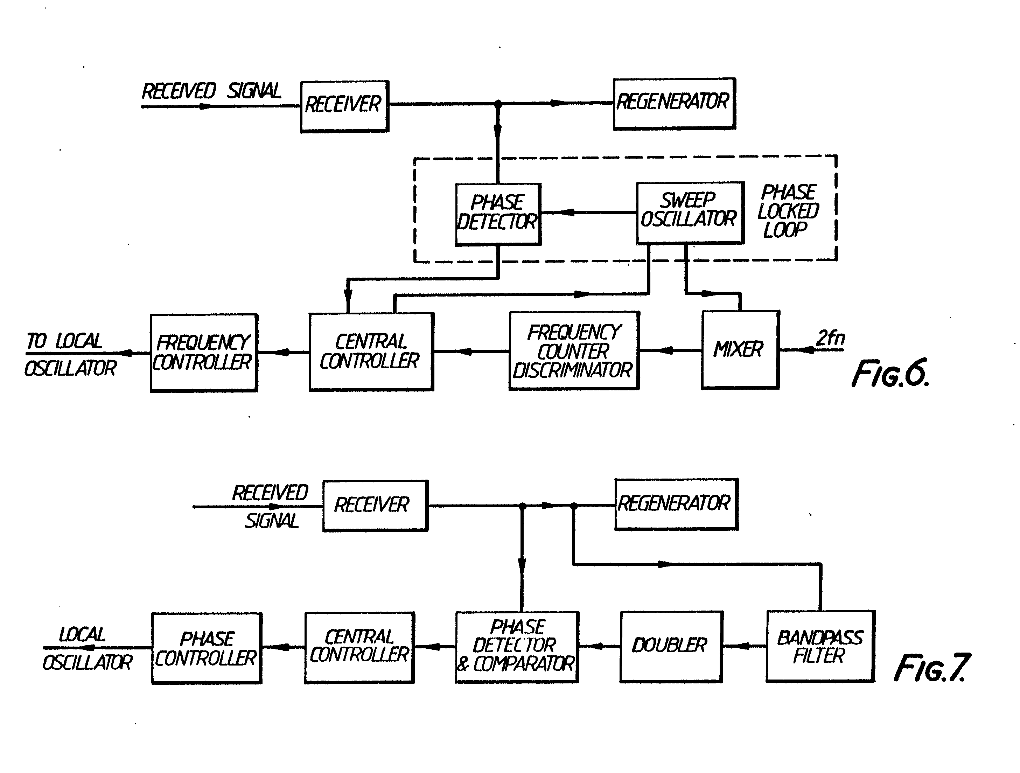

Where t is time and T the bit period. The signal level is $\cos[\pi/2 \ (1-\cos \pi t/T)]$ which translates to $\sin [\pi/2 \cos \pi t/T]$, or the Bessel function that has components around the Nyquist frequency $\frac{1}{2T}$ and its odd harmonics. Consider now the instance where the local oscillator is not frequency synchronised with an angular velocity difference of $w_e$. The signal variation during this transition becomes $\cos [\pi/2 \ (1-\cos \pi t/T) \pm w_e t]$ and one component of the expansion is $\pm \cos [\pi/2 \ (1-\cos \pi t/T)] \sin w_e t$. This same term can be shown to occur during the reverse transition from the 'zero' to 'one' state. Therefore there must appear in the overall spectrum, components of this term. The significant ones are $\sin w_e t$. and $\pm \sin w_e t \cos 2\pi t/T$. The latter term yields two lines at $(2f_n + f_e)(2f_n - f_e)$ where $w_n$ is $2\pi f_n$ and $w_e$ is $2\pi f_e$, as shown in Figure 5. Thus it is possible to determine the difference (or error) frequency $f_e$ in a number of ways. A narrow band variable filter is required to extract either $f_e$, $(2f_n - f_e)$ or $(2f_n + f_e)$. One possibility is a phase lock loop with a swept oscillator to extract $(2f_n - f_e)$, this frequency being preferred because of the difficulty of providing a sweep to cover zero to the acceptable upper limit of $f_e$. The component $(2f_n + f_e)$ requires very wide band receive circuits; whereas $(2f_n - f_e)$ requires more or less conventional bandwidths. A block diagram for the arrangement is given as Figure 6, and the signal to be processed is split off the main signal path. Once the swept frequency comes within the pull-in range of the phase lock loop, the PLL takes over control and tracks the error frequency. The frequency difference between it and $2f_n$ is obtained in a mixer, the derivation of $2f_n$ is described later. The error frequency is determined by a frequency counter, and correction applied to the local oscillator control.

The final requirement is to bring the signals in to phase synchronism. That the signal is within the range of the phase control is indictated to the presence of a signal passing through the narrow band filter centred around $2f_n$. Once this state has been reached the fine frequency control system is locked.

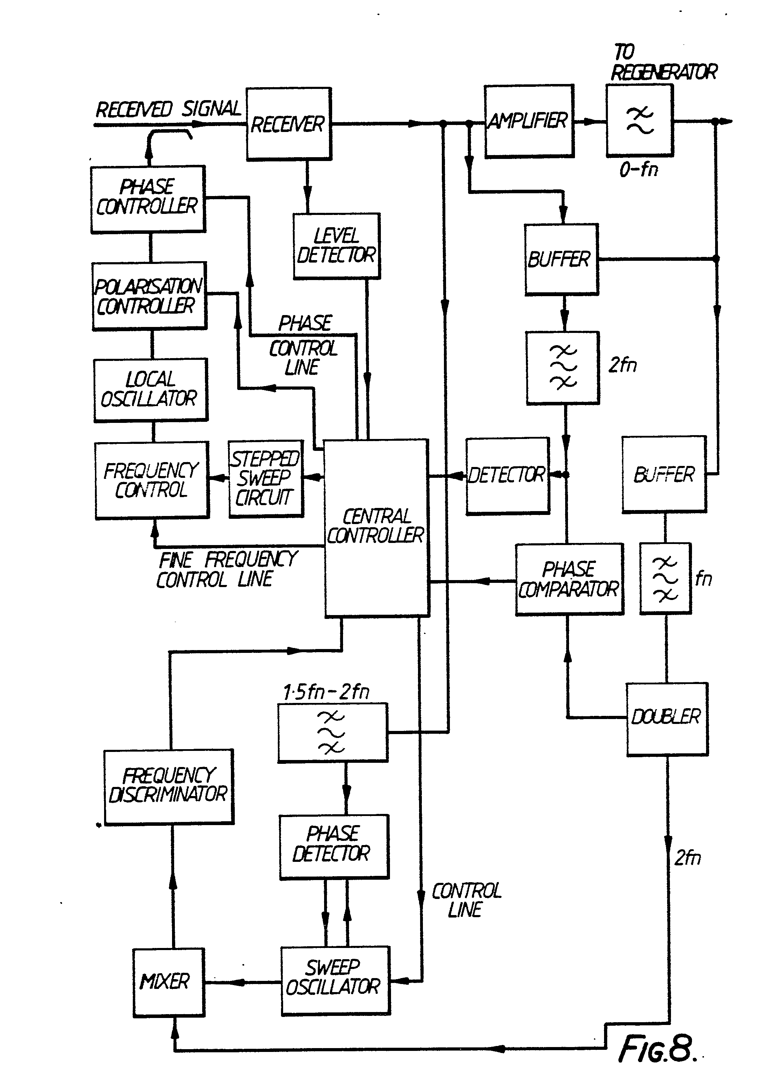

The final stage is to bring the signals into phase synchronism. When the signals are out of phase the term $\pm \cos \pi/2 \ (\cos \pi t/T)] \sin \Phi$ appears as a term in the Bessel function. Where $\phi$ is the angular misalignment. The negative sign applying when the dislacement is positive and vice versa. The magnitude of the component is high. To determine the sense of the displacement requires a reference signal and it is provided by adding to the transmission a low level signal at the Nyquist frequency, alternatively a derived clock signal can be used. When the added signal is used it is doubled and a phase comparator used to determine the sense as shown by the block diagram of Figure 8. The data for this final control could be obtained from the main transmission path.

## POLARISATION CONTROL

As changes in signal level in a homodyne receiver can be due to either frequency/phase or polarisation misalignment it is necessary to be able to differentiate between the causes. The presence of a signal in either the frequency or phase detectors indicates that the loss of signal level is due to a frequency/phase misalignment. This data would be used to lock out the polarisation controller, and this would also apply in the absence of a signal in the receiver.

When there is no indication of frequency/phase misalignment, the received signal detector would be used to congtrol the polarisation controller(s). Therefore this controller could also be under the control of the central controller. The information has to be carefully monitored as the polariser can only rotate through a limited angle so that the central controller has to determine what action is required. Two orthogonally placed polarisers can be used.

The overall block schematic is given as Figure 8 which shows the seperate frequency phase and polarisation control with the control functions being controlled by a central processor.

Figure 9a shows an alternative homodyne receiver. At the receiver, the transmitted signal and the light from the local oscillator are arranged to be in the same plane of polarisation. The combination of the two signals' fields is shown in Figure 9b.

An alternative control arrangement will now be discussed for PSK transmission the transmitted signal is switched between the two states. To achieve optimum detection efficiency it is necessary to maintain the local oscillator in frequency and phase synchronism with the received signal. This can be done in three stages with the first stage being to bring the local signal within the receive band, the second stage to be a fine frequency alignment and the final stage to produce phase alignment.

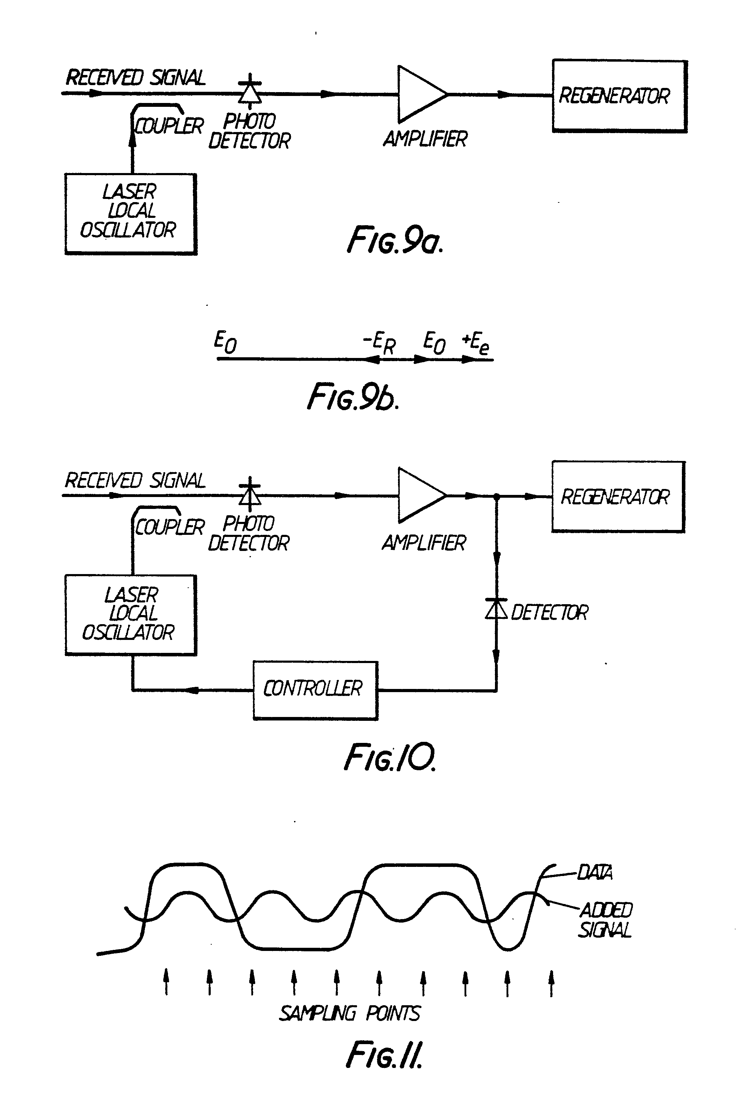

For this purpose it is assumed that the local oscillator is slowly driven across a wavelength range in steps, until the presence of a signal in the receiver is indicated by a suitable detector which could be part of the AGC circuit as shown in Figure 10. The control mechanism for a semiconductor laser could be variation of its standing current or temperature, and for a gas laser an external resonator or acoustoptic modulator.

When the signal is within the receiver control range the initial swept control signal is locked at the control current level, and this would form the mean level for the fine frequency control system that is now to be described.

To achieve the next two stages of control the level of modulation is reduced slightly below $\pm\pi/2$, and to add a low level signal such that the peak modulations are $\pm\pi/2$. Preferably the added frequency is at the Nyquist frequency of $1/2T$ where $T$ is the bit period. By arranging that the cross overs of the added signal coincide with the sampling of the main data, as illustrated in Figure 11, ensures that there is a minimum degradation in the system performance.

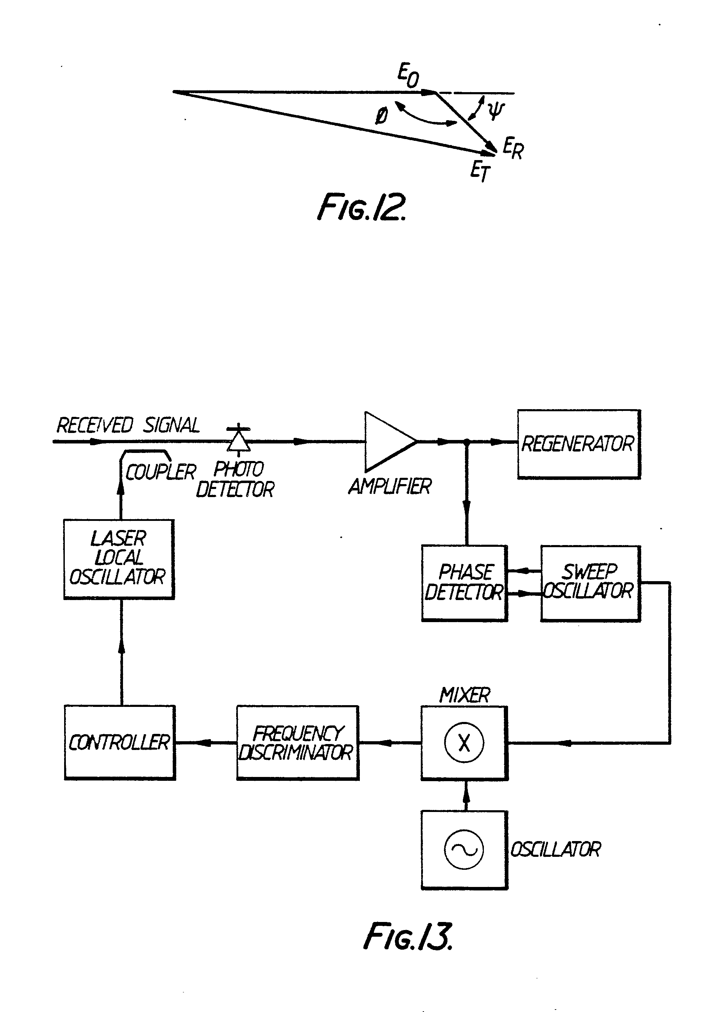

For a reasonable understanding of the way that the control data is derived, it is necessary to provide a more detailed analysis than that derived earlier from Figure 9b. Consider the condition given by Figure 12 with the signals not phase related. By the well known trigonometrical relationship it can be shown that

$$E_T^2 = E_0^2 + E_R^2 + 2E_0E_R \cos\phi$$

where $E_T$ is the total field and $\phi$ the angle of misalignment.

Thus the signal level is proportional to $2E_0E_R \cos\phi$. As the angle varied by the modulation is as shown in Figure 12, it follows that the detected signal is sin ( (t) ) where (t) is the time variant function of.

Thus in the higher phase condition the output is:

$$\sin [ (\pi/2 - \Phi) + \phi \sin (\pi t/T) ]$$

where $\phi$ is the peak phase change produced by the added signal and in the lower phase state the output is:

$$\sin [ - (\pi/2 - \Phi) + \phi \sin (\pi t/T) ]$$

expanding these terms gives

$$\sin [ \pm (\pi/2 - \phi) ] \cos [ \phi \sin (\pi t/T) ]$$
$$+ \cos [ \pm (\pi/2 - \phi) ] \sin [ \phi \sin (\pi t/T) ]$$

The first term produces equal and opposite components that cancel each other in the overall spectrum. Whereas the second term produces components that add, and are

$$\cos [\pi/2 - \phi] [2J_1 (\phi) \sin (\pi t/T) - 2J_3 (\phi) \sin 3\pi t/T ...]$$

Where $J_n (\phi)$ are the appropriate Bessel functions.

The term of significance is

$$2 \cos [\pi/2 - \Phi] [J_1 (\phi) \sin (\pi t/T) ] \qquad (1)$$

When the frequencing of the local oscillator is different from the received signal frequency the outputs are:

$$\sin [\pm[\pi/2 - \phi] + wt + \sin \phi (\pi t/T) ]$$

Where is the difference angular velocity.

Expanding as before produces the resultant terms as:

$$\cos [\pm(\pi/2 - \phi)] \sin [wt + \phi \sin (\pi t/T)]$$
$$= \cos [\pm (\pi/2 - \phi) ] [ wt \cos [ \sin (\pi t/T) ] + \cos wt \sin [ \phi \sin (\pi t/T)] ]$$

which gives rise to

$$\cos (\pi/2 - \phi) \{[\sin t [J_0 ( \phi) + 2J_2 (\phi) \cos (2\pi t/T) ...]$$
$$+ \cos t [2J_1 (\phi) \sin (\pi t/T) - 2J_3 (\phi) \sin (3\pi t/T) ...]\} \qquad (2)$$

The terms of significance are

1. $\cos (\pi/2 - \phi) J_0 (\phi) \sin wt$
2. $2 \cos (\pi/2 - \phi) J_1 (\phi) \cos wt \sin (\pi t/T)$
3. $2 \cos (\pi/2 - \phi) J_2 (\phi) \sin wt \cos (2\pi t/T)$

The components of any of these products could be used to determine the degree of frequency misalignment. In the presence of noise and other spectral components it would not be possible to use broad band selective circuits to locate the component and so narrow band tracking filters would be used. One example is given in Figure 13. This would consist of a sweeping oscillator that provides one input to a phase detector. The second input would be the filtered receive signal. The output of the phase detector would pass to a controller. When the signals are within phase locking range the controller would lock the swept oscillator to the appropriate component on the spectrum.

The preferred component is the one from term 2 that is the difference frequency above the Nyquist frequency. This is chosen since it only requires a swept range of 2:1 from the Nyquist frequency to twice the Nyquist frequency. To determine the degree of frequency misalignment the signal of the locked oscillator would be mixed with a signal from an oscillator at the Nyquist frequency. The difference frequency would then be determined in a frequency counter and its output used to adjust the local oscillator frequency.

When the fine frequency control has been brought within the passband of the narrow filter centred around the Nyquist frequency, the phase control circuit is brought into action. By replacing wt by the displacement angle $\alpha$ in the second term derived from equation (2), it can be readily seen that there is a component in the Nyquist frequency whose magnitude is

$$2 \cos (\pi/2 - \phi) \cos \alpha J_1 (\phi)$$

Comparing this with equation (1) shows that it is the component at phase alignment multiplied by $\cos \alpha$. Thus as the angle of displacement increases this signal reduces in level. Therefore, the phase of the local oscillator would be adjusted for maximum d. c. out of the detector associated with the filter.

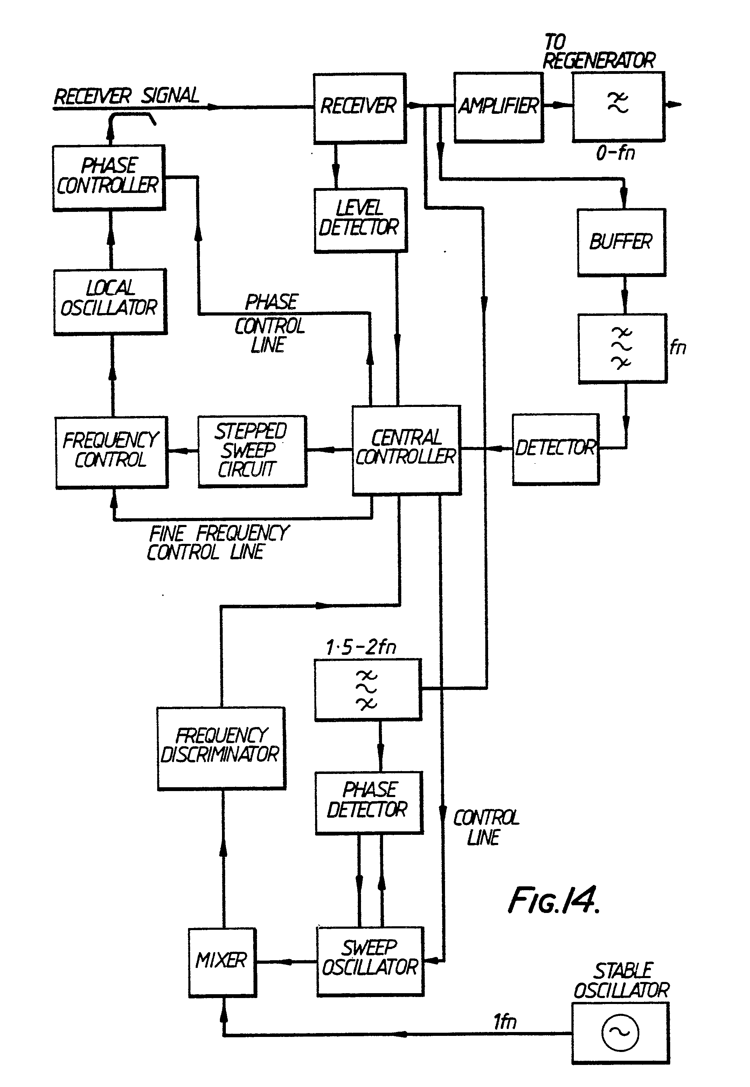

The overall control system is given as Figure 14. The present invention may be extended to heterodyne receivers requiring carrier derivation. Two common methods of deriving the carrier are either to double the signal and after retrieval of the double frequency, halving it to obtain the desired signal. Or alternatively decrease the level of modulation and hence send a small level of carrier. In an optical heterodyne system the carrier can be recovered by shaping the transitions of the modulation and making use of the non-linear detection.

In an optical heterodyne system the input to the receive detector is the result of the addition of the received signal with a local oscillator light source. It is the sum of their fields and these can be considered as two electric vectors as shown in Figure 15. The sum of the two vectors $E_o$ of the local oscillator and $E_R$ of the received signal is given by the well known trigonometrical relationship.

$$E_T^2 = E_o^2 + E_R^2 + 2E_o E_R \cos \phi$$

It is the enhanced signal $2E_o E_R \cos \phi$ that is the significant term. As the modulation is the variation of $\phi$ in Figure 15 and in a heterodyne signal the vector is rotating at wt, then the detected signal can be written as

$$\sin (wt + \phi (t) )$$

Where $\phi(t)$ is the modulation function.

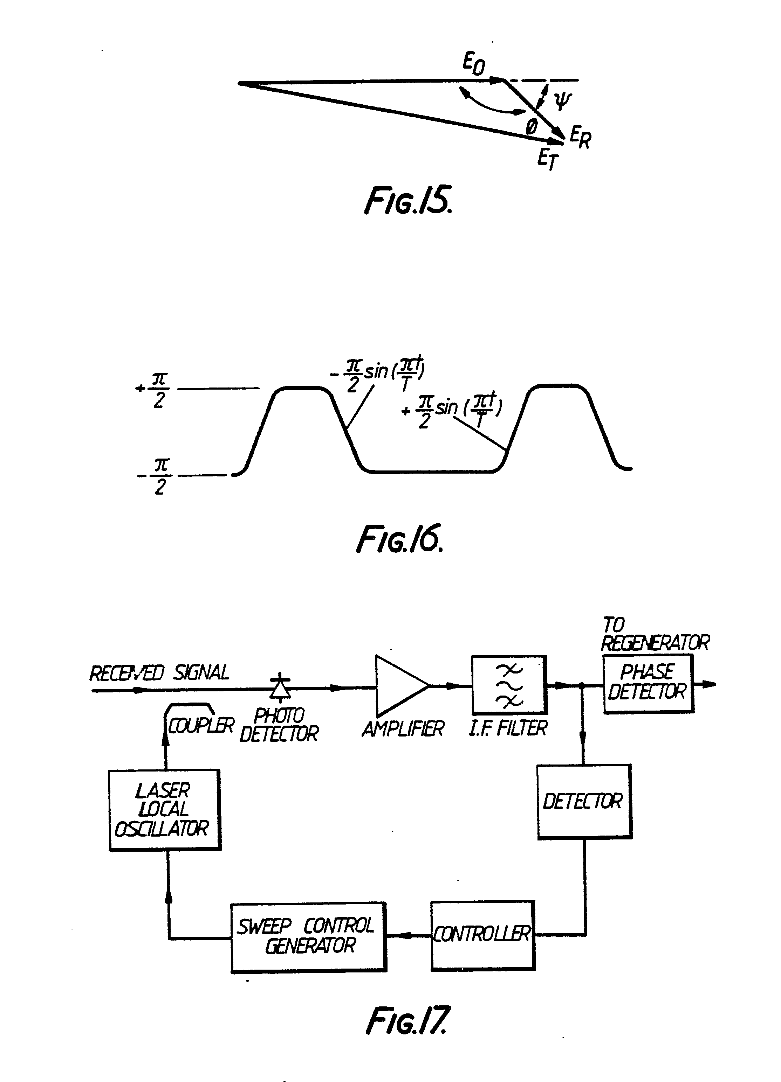

In order to obtain equal numbers of half cycles in one bit period w must be equal to $n\pi T$ where T is a bit period. To analyse the signal the transmission can be subdivided into the two regions indicated in Figure 16. Considering the regions where $\phi$ (t) is constant and $\pm\pi/2$ the detected signal can be written as

$$\sin (n\pi T/t \pm \pi/2)$$

As the periods of opposite phase are equal no component in n/T arises.

Taking the periods where the phase is changing from one state to the other and for convenience consider that the shape to be sinusiodal, the detected signal can be written as

$$\sin ( n\pi t/T + \pi/2 \sin ( \pi t/T) )$$

rising transition.

Expanding this expression produces

$$\sin ( n\pi t/T ) \cos (\pm \pi/2 \sin \pi t/T ) )$$
$$+ \cos n\pi t/T \sin (\pm \pi/2 \sin \pi t/T)$$

Once again components of $\sin (\pm \pi/2 \sin ( \pi t/T) )$ cancel whereas components in $\cos (\pm \pi/2 \sin ( \pi t/T) )$ are of the same sign and add. Expanding the first term further produces

$$\sin ( \pi n t/T) (J_0 ( \pi/2 ) + 2J_2 ( \pi/2 ) \cos ( 2\pi t/T ) + 2J_4 ( \pi/2 ) \cos (4\pi t/T) \quad (1)$$

Where $J_n (2)$ is the appropriate Bessel function.

This gives rise to an in phase component of: $J_0 (\pi/2) \sin n\pi t/T$

and the RMS level is 9.5dB below the mean data power.

The recovered carrier can now be used for

(a) coherent detection of the modulation, and

(b) used as control information.

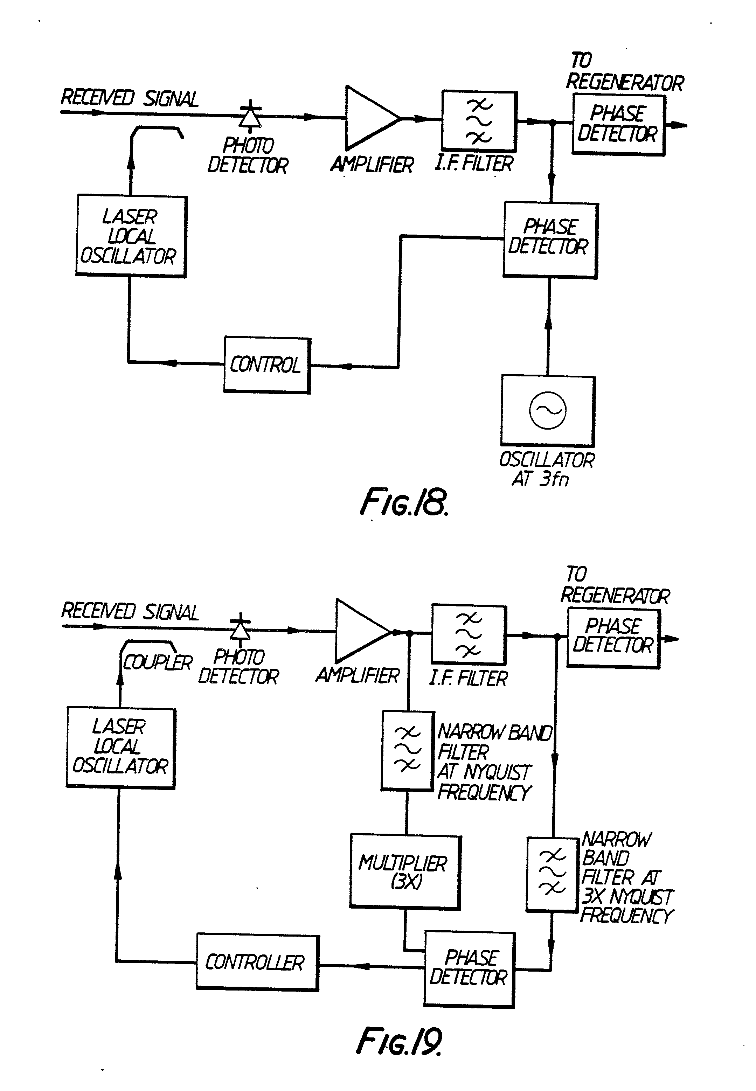

The control system could be done in a number of ways. On start up no detectable signal may be present and a search procedure would be needed that is obtained by sweeping the frequency of the local oscillator slowly across a limited range as shown in Figure 17. When a signal is obtained at the detector at the end of the intermediate frequency amplifier, the frequency of the local oscillator would be adjusted to provide a maximum output from the detector. The next stage would be to use a filter circuit to find the signal carrier and adjust it on to the correct frequency as in Figure 18. To determine this frequency would require a frequency discriminator. For even closer control the third stage could make use of the ( n-2/T ) frequency component that occurs as seen from the second of the expansion of equation (1). By filtering this component and multiplying by the appropriate ratio it can be compared with the intermediate frequency carrier in a phase detector as shown in Figure 19. One convenient value for n is three so that the multiplication is three times as n-2 = 1. The output of the phase detector would provide information on the sense of the misalignment in that the difference frequency is too low then the intermediate frequency is too low, correspondingly the reverse applies if the difference is too high.

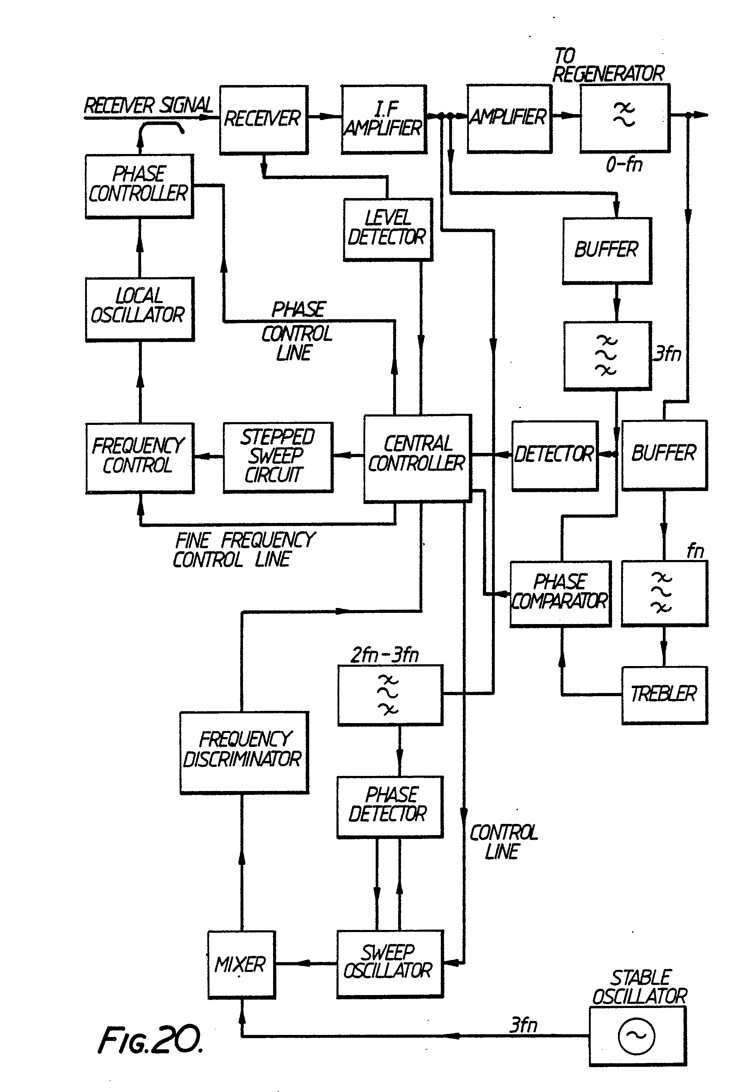

The overall control system is given as Figure 20.

The above description is not intended to limit the scope of the present invention. It will be appreciated by those skilled in the art that alternative implementations of the present inventions are possible within the scope of the presently claimed invention.

# Claims

1. A control arrangement for a local oscillator of an optical homodyne or heterodyne receiver of a phase-shift keying system, wherein the arrangement comprises a controller arranged to control means for maintaining the oscillator's frequency and phase at an optimum value.

2. A control arrangement as claimed in claim 1, wherein means is provided to maintain the local oscillator's plane of polarisation co-planar with that of a signal received by the control arrangement.

3. A control arrangement as claimed in claim 2 wherein the oscillator is a laser oscillator.

4. A control arrangement is claimed in claim 3 wherein the means for maintaining the oscillator's frequency at an optimum value comprises a sweep oscillator and phase detector forming a phase lock loop for controlling the local oscillator.

5. A control arrangement as claimed in claim 4, wherein the error frequency is determined by a frequency counter, and correction is applied to the local oscillator by way of a frequency control circuit.

6. A control arrangement as claimed in claim 5, wherein a narrow band filter is provided, and the presence of a signal passing therethrough indicates that the signal is in the range of phase control.

7. A control arrangement as claimed in claim 6, wherein a reference signal is provided, by adding to a transmitted signal, a signal at the Nyquist frequency, a doubler circuit receives and doubles the signal, and a phase comparator determines the sense of phase displacement.

8. A control arrangement as claimed in claim 7 wherein two orthogonally placed polarisers are provided, each of which is rotatable through a limited angle and controlled by a polarisation control circuit which is inhibited when a signal is detected in the frequency or phase detector.

9. A control arrangement as claimed in claim 1, wherein, at the receiver, the transmitted signal and the light from the local oscillator are arranged to be in the same plane of polarisation, and the local oscillator is driven across a wavelength range in steps until a signal is present at the receiver, whereupon the signal is locked at that level.

10. A control arrangement as claimed in claim 9, wherein a phase detector receives an input signal from a sweep oscillator and the received signal, the output of the phase detector is passed to the controller which locks the sweep oscillator when the signals are in phase locking range.

11. A control arrangement as claimed in claim 10, wherein the locked signal of the sweep oscillator is mixed by a mixer circuit with a signal from an oscillator operating at the Nyquist frequency, and the difference frequency of the two signals is determined by a frequency counter and used to adjust the local oscillator frequency.

12. A control arrangement as claimed in claim 11, wherein a phase control circuit is used to adjust the phase of the local oscillator to give maximum direct current from the detector, after the frequency has been brought within the passband of a filter centred about the Nyquist frequency.

13. A control arrangement as claimed in claim 1, wherein a sweep signal generator is used to sweep the frequency of the local oscillator across a frequency range, and a detector is provided at an end of an intermediate frequency amplifier and is used to detect the presence of a signal, and the local oscillator is adjusted to provide maximum output from the detector.

14. A control arrangement as claimed in claim 13, wherein a filter circuit is provided to find the signal carrier and adjust it to a required frequency.

15. A control arrangement as claimed in claim 14, wherein a phase detector receives an input from the input side of the intermediate frequency filter, and an input from the output side of the intermediate frequency filter, the signal from an input side being applied to the detector by way of a narrow band filter at the Nyquist frequency connected to a multiplier, and the signal from the output side being applied to the detector by way a narrow band filter at three times the Nyquist frequency, whereby the output of the detector provides information on the sense of misalignment, in that if the difference frequency is low the intermediate frequency is low and vice versa.

MODULATED
SOURCE

TRANSMISSION
PATH

RECEIVER

LOCAL
OSCILLATOR
SOURCE

Fig.Ia.

$E_O$

$E_R$   $E_R$

Fig.Ib.

RECEIVED
SIGNAL

RECEIVER

SIGNAL
DETECTOR

LOCAL
OSCILLATOR

SWEEP
GENERATOR

CONTROLLER

Fig.2.

$E_O$

$E_R$

$\psi$

$E_T$

## FIG.3.

PHASE
CHANGE

$\dfrac{\pi}{2}$

$\dfrac{\pi}{2}$

TIME

## FIG.4.

DETETED
LEVEL

$f_e$        $2f_n - f_e$        $2f_n + f_e$

## FIG.5.

RECEIVED SIGNAL → RECEIVER → REGENERATOR

PHASE DETECTOR ← SWEEP OSCILLATOR | PHASE LOCKED LOOP

TO LOCAL OSCILLATOR ← FREQUENCY CONTROLLER ← CENTRAL CONTROLLER ← FREQUENCY COUNTER DISCRIMINATOR ← MIXER ← $2f_n$

*FIG.6.*

RECEIVED SIGNAL → RECEIVER → REGENERATOR

LOCAL OSCILLATOR ← PHASE CONTROLLER ← CENTRAL CONTROLLER ← PHASE DETECTOR & COMPARATOR ← DOUBLER ← BANDPASS FILTER

*FIG.7.*

FIG.8.

RECEIVED SIGNAL
COUPLER
PHOTO DETECTOR
AMPLIFIER
REGENERATOR
LASER LOCAL OSCILLATOR

*FIG.9a.*

$E_O$     $-E_R$   $E_O$   $+E_e$

*FIG.9b.*

RECEIVED SIGNAL
COUPLER
PHOTO DETECTOR
AMPLIFIER
REGENERATOR
LASER LOCAL OSCILLATOR
DETECTOR
CONTROLLER

*FIG.10.*

DATA
ADDED SIGNAL
SAMPLING POINTS

*FIG.11.*

FIG.12.

FIG.13.

Fig.14.

$E_O$

$\psi$

$\emptyset$

$E_R$

$E_T$

FIG.15.

$+\dfrac{\pi}{2}$

$-\dfrac{\pi}{2}\sin\left(\dfrac{\pi t}{T}\right)$

$+\dfrac{\pi}{2}\sin\left(\dfrac{\pi t}{T}\right)$

$-\dfrac{\pi}{2}$

FIG.16.

TO
REGENERATOR

RECEIVED SIGNAL

PHASE
DETECTOR

COUPLER PHOTO
DETECTOR

AMPLIFIER

I.F. FILTER

LASER
LOCAL
OSCILLATOR

DETECTOR

SWEEP CONTROL
GENERATOR

CONTROLLER

FIG.17.

FIG.18.

FIG.19.

**Fig.20.**